(19) **Europäisches Patentamt**
**European Patent Office**
**Office européen des brevets**

(11) **EP 4 699 734 A1**

(12) **EUROPEAN PATENT APPLICATION**
published in accordance with Art. 153(4) EPC

(43) Date of publication:
**25.02.2026 Bulletin 2026/09**

(51) International Patent Classification (IPC):
**B23K 26/21** *(2014.01)*   **B23K 26/08** *(2014.01)*
**B23K 26/044** *(2014.01)*   **F04C 29/00** *(2006.01)*

(21) Application number: **25801136.0**

(22) Date of filing: **27.02.2025**

(86) International application number:
**PCT/CN2025/079540**

(87) International publication number:
**WO 2025/236804 (20.11.2025 Gazette 2025/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **16.05.2024   CN 202410608197**

(71) Applicant: **Shanghai Highly Electrical Appliances
Co., Ltd.
Shanghai 201206 (CN)**

(72) Inventors:
• **FENG, Bin**
  **Shanghai 201206 (CN)**
• **WANG, Haisheng**
  **Shanghai 201206 (CN)**
• **ZHAO, Haidong**
  **Shanghai 201206 (CN)**
• **ZHU, Jiarui**
  **Shanghai 201206 (CN)**

(74) Representative: **E. Blum & Co. AG
Franklinturm
Hofwiesenstrasse 349
8050 Zürich (CH)**

(54) **LASER WELDING METHOD AND COMPRESSOR**

(57)    The present disclosure provides a laser welding method and a compressor, the method includes: setting a laser beam trajectory including an oscillation trajectory and oscillation frequency, and a moving speed of a first welding part and a second welding part, arranging the first and second welding parts such that the oscillation trajectory has at least two intersection points with a gap to be welded between the first and second welding parts; moving the first and second welding parts at the moving speed, and activating a laser beam to weld the first and second welding parts along the laser beam trajectory. The present disclosure allows for welding larger gaps through at least two intersections between the oscillation trajectory and the gap to be welded, thereby reducing arrangement precision requirements between the components to be welded, increasing the effective sealing depth of the weld seam, and enhancing welding sealing performance.

S100
setting a laser beam trajectory and a moving speed of a first welding part and a second welding part, wherein the laser beam trajectory includes an oscillation trajectory and oscillation frequency

S200
arranging the first welding part and the second welding part such that the oscillation trajectory has at least two intersection points with a gap to be welded between the first welding part and the second welding part

S300
moving the first welding part and the second welding part at the moving speed, and activating a laser beam to weld the first welding part and the second welding part along the laser beam trajectory

FIG. 1

# Description

## TECHNICAL FIELD

The present disclosure relates to the field of electrical connections, specifically to a laser welding method and a compressor.

## BACKGROUND

The fixed connection between the upper shell cover (or lower shell cover) and the shell of an air conditioning compressor is typically achieved using the Metal Active Gas Arc Welding (MAG welding) process. MAG welding uses a mixed gas as a protective agent and the electrode material as filler material for welding. However, this process has several drawbacks: significant welding deformation, which affects product precision; electrical conductivity of the compressor during welding leading to discharge erosion between its precision components, thereby reducing product accuracy; substantial welding spatter requiring post-welding rework to remove; and direct material costs incurred from the use of solder during welding.

To address these issues with MAG welding and considering the cost increase due to the use of welding wires, some compressor components have adopted a laser welding method that does not require filler material. However, laser welding has the following challenges.

1. Laser welding is not suitable for existing welding grooves. In the field of welding, different welding types require specifically designed welding grooves. The existing V-shaped groove for MAG welding is a typical structure designed for filler welding, facilitating the filling of the V-shaped groove with solder to form a high-quality weld. Laser welding, however, is autogenous and does not require filler material, thus not needing a V-shaped groove. Usually, the V-shaped groove is primarily set on the inner chamfer of the shell, the chamfer also serves as a guide. Removing this groove would eliminate the guiding function, potentially causing damage during installation. Applying laser autogenous welding to V-shaped grooves is a technical challenge.

2. The fit gap between products affects laser welding quality. The shell cover and the shell of a compressor are either circular or curved. After assembly, gaps exist, and during laser welding, laser beams may pass directly through these gaps, resulting in missed welds or insufficient penetration.

3. Deviation in welding position affects laser welding quality. Due to the curvature of the shell cover and the shell, circumferential welding may result in position deviations, causing weak or missed welds.

4. Laser welding requires higher material cleanliness. In mass production, materials may have poor cleanliness, such as oil stains. The higher energy density of laser welding compared to MAG welding can more easily cause weld porosity, and in severe cases, can lead to blowholes, causing compressor leakage and affecting the quality yield. Reworking and repairs will also reduce production efficiency.

Therefore, improving the quality of laser welding is an issue that the present disclosure aims to solve.

It should be noted that the information disclosed in the background section is only intended to enhance understanding of the background of the present disclosure and may include information that does not constitute prior art known to those skilled in the art.

## SUMMARY

In view of the issues in the prior art, the objective of the present disclosure is to provide a laser welding method and a compressor. The laser welding method achieves larger gap welding through at least two intersections of the laser beam's oscillation trajectory with a gap to be welded, thereby reducing the precision required for arranging components to be welded. Additionally, it enhances the effective sealing depth of the weld seam and improves welding sealing performance.

A first aspect of the present disclosure provides a laser welding method, which includes the following steps: S100: setting a laser beam trajectory and a moving speed of a first welding part and a second welding part, wherein the laser beam trajectory includes an oscillation trajectory and oscillation frequency; S200: arranging the first welding part and the second welding part such that the oscillation trajectory has at least two intersection points with a gap to be welded between the first welding part and the second welding part; S300: moving the first welding part and the second welding part at the moving speed, and activating a laser beam to weld the first welding part and the second welding part along the laser beam trajectory.

According to the first aspect of the present disclosure, the oscillation trajectory is a combination of one or more shapes of polygonal, circular, and elliptical.

According to the first aspect of the present disclosure, the oscillation trajectory is symmetric with respect to the gap to be welded.

According to the first aspect of the present disclosure, the oscillation trajectory is quadrilateral, a spot diameter of the laser beam is D, a first side length of the quadrilateral perpendicular to an extension direction of the gap to be welded is H, a width of the gap to be welded between the first welding part and the second welding part is h, and the following conditions are satisfied: $D+h/2 \leq H \leq D+h$.

According to the first aspect of the present disclosure, a second side length of the quadrilateral in the extension direction of the gap to be welded is L, and the following conditions are satisfied: $D<L$, or, $H<L$.

According to the first aspect of the present disclosure, the oscillation frequency is less than or equal to 100Hz.

According to the first aspect of the present disclosure, a width of the gap to be welded between the first welding part and the second welding part is h, and the width h is less than or equal to 1.0mm.

According to the first aspect of the present disclosure, the oscillation trajectory is achieved by oscillation of internal galvanometers in a laser welding head.

A second aspect of the present disclosure provides a compressor, wherein at least two components of the compressor are fixedly connected using the laser welding method mentioned above.

According to the second aspect of the present disclosure, the compressor includes an upper shell cover, a lower shell cover, and a shell, wherein the upper shell cover and the shell, as well as the lower shell cover and the shell, are fixedly connected using the laser welding method.

The laser welding method according to the present disclosure reduces the direct material cost of welding wires and improves welding quality, by crossing the oscillation trajectory of the laser beam with the gap to be welded at least twice, wherein a first crossing performs pre-welding and a second crossing repairs pre-welding defects. Furthermore, within the oscillation trajectory, two laser beam trajectories along the extension direction of the gap to be welded can stir the molten pool to eliminate pores, thereby enhancing the ability to melt the base material and increase the filling height. Accordingly, the laser welding method of the present disclosure enables welding of larger gaps, reduces the precision required for arranging components to be welded, increases the effective sealing depth of the weld seam, and improves the welding sealing performance.

## BRIEF DESCRIPTION OF THE DRAWINGS

Other features, objectives, and advantages of the present disclosure will become more apparent through detailed description of non-restrictive embodiments with reference to the following drawings.

FIG. 1 is a flow chart of a laser welding method according to one embodiment of the present disclosure;

FIG. 2 is a top view during welding of the laser welding method according to one embodiment of the present disclosure;

FIG. 3 is a sectional view during welding of the laser welding method according to one embodiment of the present disclosure; and

FIGS. 4 to 7 are schematic views of different stages when welding a shell cover and a shell of a compressor using the laser welding method according to one embodiment of the present disclosure.

## DETAILED DESCRIPTION

Exemplary embodiments will now be described more fully with reference to the accompanying drawings. However, the exemplary embodiments can be embodied in many different forms and should not be construed as limited to the embodiments set forth herein. Rather, these embodiments are provided so that the present disclosure will be thorough and complete, and will fully convey the concept of the exemplary embodiments to those skilled in the art. The embodiments described below with reference to the drawings are illustrative and are only for explaining the present disclosure, and should not be construed as limiting the present disclosure. In the drawings, the same reference numerals denote the same or similar structures, thus repetitive descriptions thereof will be omitted.

In the description of the present disclosure, it should be understood that terms "first" and "second" are used to describe purposes only, and should not be understood as indicating or implying relative importance or implicitly indicating the number of technical features indicated. Thus, features defined as "first" and "second" may explicitly or implicitly include one or more features. In the description of the present disclosure, "multiple" means two or more, unless there is a specific limitation otherwise.

In the description of the present disclosure, it should be noted that, unless otherwise specified and limited, terms such as "installed", "connected", and "coupled" should be understood in a broad sense, for example, they may be fixed connections, detachable connections, or integral connections; they may be mechanical connections, electrical connections, or capable of communication; they may be directly connected or indirectly connected through an intermediary; they may be internal communication between two components or interaction between two components. For those skilled in the art, the specific meanings of the above terms in the present disclosure can be understood according to specific situations.

The following disclosure provides many different embodiments and examples for implementing different structures of the present disclosure. To simplify the disclosure of the present disclosure, components and settings of specific examples are described below. Of course, they are merely examples, and are not intended to limit the present disclosure. Moreover, the present disclosure may repeat reference numerals and/or reference letters in different instances. Such repetition is for simplicity and clarity, and does not in itself indicate a relationship between the various embodiments and/or settings discussed. Furthermore, the present disclosure provides examples of various specific processes and materials, but one skilled in the art can recognize the application of other processes and/or the use of other materials.

To address technical problems in the prior art, the present disclosure provides a laser welding method and a compressor. The laser welding method includes the following steps: setting a laser beam trajectory and a moving speed of a first welding part and a second welding part, wherein the laser beam trajectory includes an oscillation trajectory and oscillation frequency; arranging the first welding part and the second welding part such that the oscillation trajectory has at least two intersection points with a gap to be welded between the first welding part and the second welding part; moving the first welding part and the second welding part at the moving speed, and activating a laser beam to weld the first welding part and the second welding part along the laser beam trajectory.

The laser welding method according to the present disclosure reduces the direct material cost of welding wires and improves welding quality, by crossing the oscillation trajectory of the laser beam with the gap to be welded at least twice, wherein a first crossing performs pre-welding and a second crossing repairs pre-welding defects. Furthermore, within the oscillation trajectory, two laser beam trajectories along the extension direction of the gap to be welded can stir the molten pool to eliminate pores, thereby enhancing the ability to melt the base material and increase the filling height. Accordingly, the laser welding method of the present disclosure enables welding of larger gaps, reduces the precision required for arranging components to be welded, increases the effective sealing depth of the weld seam, and improves the welding sealing performance.

The laser welding method and the compressor of the present disclosure will be further illustrated in combination with the accompanying drawings and specific embodiments. It should be understood that the specific embodiments are not intended to limit the scope of protection of the present disclosure.

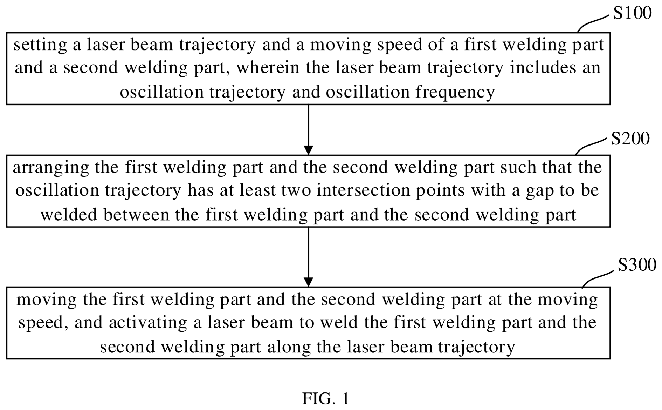

FIG. 1 is a flowchart of the laser welding method according to an embodiment of the present disclosure. Specifically, the laser welding method includes the following steps.

S100: Set the laser beam trajectory and the moving speed of the first welding part and the second welding part. The oscillation trajectory is a path of the laser beam's oscillation and movement. The present disclosure adopts swing laser welding (dynamic laser welding), wherein the laser welding head of the laser welding equipment is a swinging head. The laser beam's oscillation is achieved by setting two high-speed steering galvanometers within the laser welding head. The high-speed oscillation of the galvanometers changes the laser beam's output direction and movement trajectory. The laser beam trajectory includes a oscillation trajectory and oscillation frequency, wherein the oscillation trajectory is the minimum period of the laser beam in the swing laser welding. The oscillation trajectory can be polygonal, circular, elliptical, or a combination of these shapes, forming such as 8-shaped, ∞-shaped, spiral shaped, etc. Special patterns can be achieved by programming to control the galvanometers' oscillation within the laser welding head. Laser welding equipment typically comes with configuration software, during welding, allows users to select the laser swing welding function and set the parameters of the laser beam's oscillation trajectory. For example, if the oscillation trajectory is circular, the diameter of the oscillation trajectory can be set; if the oscillation trajectory is rectangular, the length and width of the oscillation trajectory can be set. These are not elaborated on here.

S200: Arrange the first welding part and the second welding part so that the oscillation trajectory has at least two intersection points with the gap to be welded between them. Of course, before arrangement, welding areas of the first welding part and the second welding part can undergo pre-welding treatments such as grinding, pickling, or laser cleaning. The arrangement here refers to initial positions of the first welding part and the second welding part. During welding, the first welding part and the second welding part will move, specifically, the gap to be welded formed between them moves as a whole. The actual welding trajectory is a coupling of the laser beam trajectory and the movement trajectory of the first welding part and the second welding part.

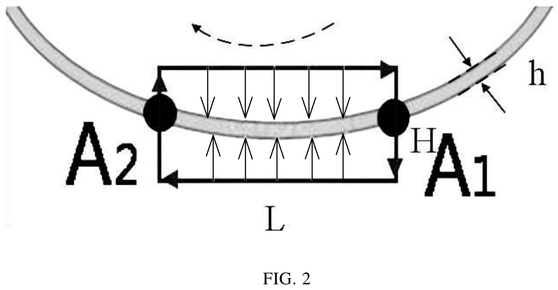

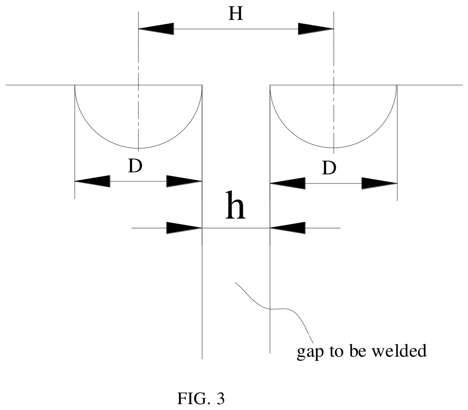

FIGS. 2 and 3 are a top view and a sectional view of the laser welding method during welding according to an embodiment of the present disclosure, wherein the oscillation trajectory is taken as a quadrilateral for example. A first side length of the quadrilateral perpendicular to an extension direction of the gap to be welded is H, and a second side length along the extension direction of the gap to be welded is L. Preferably, the quadrilateral is a rectangle, wherein L is the longer side of the rectangle, and H is the shorter side. The first welding part and the second welding part are arranged below the laser welding head, and the position of the gap to be welded is preset within the oscillation area of the quadrilateral. The oscillation trajectory is symmetrical with respect to the gap to be welded, meaning that the gap to be welded is on the central axis of the rectangle's shorter side, H. In actual use, pre-visual guidance configured with the laser equipment can ensure that the gap to be welded remains between the two long sides of the oscillation trajectory of the rectangular during welding. If the gap to be welded deviates to or beyond either long side of the quadrilateral, the other long side of the quadrilateral will result in ineffective welding, which reduces the ability of the molten base metal to converge and fill the gap during welding, thereby reducing the welding quality.

In the above embodiments, during welding, the gap between the materials to be welded can rotate clockwise, as indicated by the dashed arrow in FIG. 2, while the laser welding head remains stationary. The high-speed movement of the galvanometers inside the laser welding head achieves the set laser beam oscillation trajectory. The laser beam starts at point A1, follows the quadrilateral oscillation trajectory, and the gap to be welded between the first welding part and the second welding part moves clockwise relative to the laser beam's output path, returning to point A1 after reaching point A2. This completes one quadrilateral output cycle. The oscillation frequency in step S200 refers to the number of times the oscillation trajectory is completed in one second. For example, if the oscillation frequency is 100Hz, the laser beam can complete 100 quadrilateral oscillation trajectories in one second.

After completing step S200, step S300 is executed: move the first welding part and the second welding part at the moving speed, and activate the laser beam to weld the first welding part and the second welding part along the laser beam trajectory. The laser equipment used in the present disclosure can be either a single-mode laser or a multi-mode laser. The laser power can be 500W or more, and a fiber with a core diameter of 50$\mu$m or more can be used; the swinging linear speed can be 2000 mm/s or more; the protective gas during welding can be nitrogen or argon, with a flow rate of 2.0 liters/minute or more.

During the welding process of step S300, when the laser beam passes point A1, it is the first weld. From point A1 on one side of the gap to be welded to point A2, then from point A2 on the other side of the gap to be welded to point A1, the base material on both sides of the gap to be welded melts, converges to fill the gap, and builds up the weld seam, enhancing the effective sealing depth of the weld seam, and improving welding sealing performance. Finally, when passing point A2, the weld seam is shaped to obtain a high-quality weld seam. When there are defects in the gap to be welded, such as poor material cleanliness, oil stains, etc., causing blowholes, weld collapse, or pores: the laser beam passes through points A1 to A2, causing the base metal along the two long sides L of the quadrilateral to melt, converge, and fill to repair weld defects, and simultaneously building up the existing weld. Finally, upon reaching point A2, a secondary welding process is performed to make final corrections to the weld defects, completing the self-healing welding mechanism.

In the welding method of the present disclosure, the first intersection point of the oscillation trajectory and the gap to be welded is A1, and the second intersection point is A2. The moving speed of the first welding part and the second welding part can be designed, such that the moving speed of the gap to be welded is at least less than half the speed of the laser beam along the long side of the oscillation trajectory, ensuring that the second intersection point A2 at least partially overlaps with the first intersection point A1. At this time, the two long sides of the rectangle melt the base material of the shell and the shell cover, and the melted material converges to fill the material gap. Additionally, due to the movement of the gap to be welded, when the oscillation trajectory passes the gap twice, it welds the same position of the gap to be welded. The first weld can be considered as pre-welding, serving to clean the weld point, and the second weld can be considered as repairing defects at the pre-weld point. By welding the same position of the gap twice, the welding quality can be improved, such as enhancing the effective sealing depth and the sealing performance of the weld seam. Moreover, for special materials, such as those prone to porosity and cracking, the oscillation of the laser beam in the welding method of the present disclosure acts as a "stirring", which can improve the grain size of the weld seam area, eliminating welding defects like pores and cracks. For instance, with a circular oscillation trajectory, the repeated welding area is large, and the laser beam heats the molten pool multiple times, similar to stirring the molten pool, which helps to release gas pores and refine weld seam grain size. The grain size of the weld seam obtained by the welding method of the present disclosure can be between 0.05mm and 0.2mm, while the grain size of the weld seam obtained by conventional laser welding methods (not using oscillation welding) is generally greater than 0.2mm.

To further improve the welding effect, in the welding method of the present disclosure, when the spot diameter of the laser beam is D and the width of the gap to be welded between the first welding part and the second welding part is h, one or more of the following conditions are satisfied:

$$D < L;$$

$$D + h/2 \le H \le D + h;$$

$$H < L.$$

In practice, the welding gun distance can be confirmed based on the standard focal length value of the laser welding head, and the spot diameter D of the laser beam at that gun distance is confirmed. In the above conditions, increasing H, that is, enlarging the oscillation area, can enhance the repair capability during the second weld, thereby improving the welding quality. Taking the oscillation trajectory as a rectangle for example, during the first high-temperature weld when the gap to be welded passes through the short side of the rectangle, if welding defects occur, the large oscillation area provides more opportunities to repair defects when the blowhole area passes through the large oscillation area of the rectangle. During the repair process, when the laser beam moves along the long side of the rectangle to weld, the melting base material covers the welding defect area, and when the gap to be welded crosses the short side perpendicular to the extension direction, it performs welding repair.

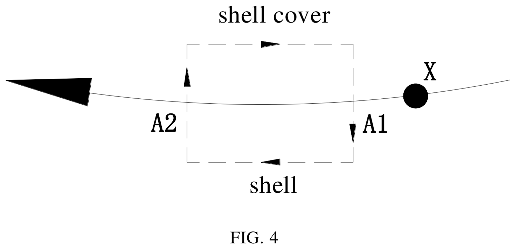

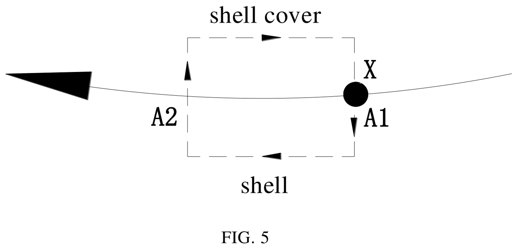

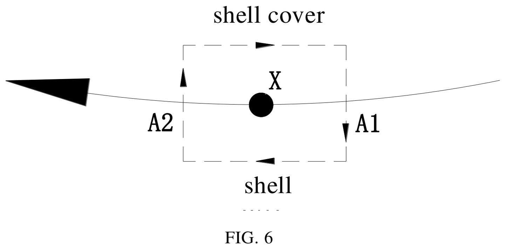

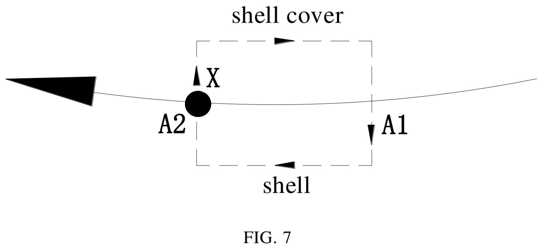

The present disclosure further provides a compressor, wherein at least two components of the compressor are fixedly connected using the laser welding method. More specifically, the compressor includes an upper shell cover, a lower shell cover, and a shell; fixed connections between the upper shell cover and the shell, and between the lower shell cover and the shell, are made using the laser welding method. FIGS. 4 to 7 are schematic diagrams of different stages during the welding of the shell cover and the shell of the compressor using the laser welding method according to an embodiment of the present disclosure, wherein the shell cover is not differentiated as to whether it is the upper shell cover or lower shell cover, that is to say, the shell cover can be either the upper shell cover or the lower shell cover. During welding, the laser beam irradiates any point X on the gap to be welded, and the laser beam successively irradiates point A1 and point A2 on the oscillation trajectory. The any point X undergoes a first welding at point A1 and a second welding at point A2. Dynamic laser requires completing irradiation heating of each of the two long sides of the quadrilateral at least once. If irradiated more than once, the irradiation interval time needs to be equal to or greater than 0.01s, with 0.01s being the weld seam cooling time, and the two long sides of the rectangle being repeatedly heated in a solid state. Repeated solid-state heating is more conducive to filling the gap to be welded and essentially completing weld seam overlap, producing a zipper effect. To ensure zipper-like welding effects, the speed of the dynamic laser beam should not be too slow or too fast. Preferably, the oscillation frequency in step S200 should be less than or equal to 100Hz. Based on the rectangle's long side being heated in a solid state, when any point X passes point A2, it is solid, and only in the solid state can the second welding repair effect be produced, as shown in FIG. 7.

When the oscillation trajectory is of another shape, the welding process is as described above, but welding parameters such as the spot diameter of the laser beam, the moving speed of the first welding part and the second welding part, and the oscillation frequency can be set to different values. For example, the spot diameter of the laser beam can be increased to expand the laser beam irradiation heating range. When the gap to be welded is larger, the oscillation range of the oscillation trajectory can be increased, such as increasing the length of the first side H in the above examples. Since the laser welding method of the present disclosure essentially involves two welds, and during welding along the second side, the laser beam stirs the molten base material, converging to cover and increase the weld seam height, it can effectively increase the width of the weldable gap. Compared to the maximum gap of 0.3mm in existing laser welding methods, the width of the gap to be welded by the welding method of the present disclosure can reach up to 1.0mm. Therefore, the welding method is suitable for gaps to be welded with a width less than or equal to 1.0mm, effectively reducing the precision required for arranging workpieces to be welded. Additionally, as the precision requirements for the gap to be welded are reduced, in some embodiments, laser equipment does not need to be equipped with a previsual guidance system; the dynamic laser zipper-like welding of the present disclosure can directly meet the welding requirements.

The welding of the shell cover and the shell of the compressor described above is circumferential welding, wherein the movement of the gap to be welded is rotational. The welding method of the present disclosure can also be applied to the welding of curved weld seams, linear weld paths, or irregular shapes composed of these. At this time, the movement of the gap to be welded or the workpiece to be welded is slightly different.

Although the embodiments of the present disclosure have been shown and described above, it will be understood that the above embodiments are exemplary and not limiting to the present disclosure. Those skilled in the art can make changes, modifications, replacements, and variations to the above embodiments without departing from the scope of the present disclosure.

The above content is a further detailed description of the present disclosure in conjunction with specific preferred embodiments, which should not be considered as limiting the specific implementation of the present disclosure to these descriptions. For those skilled in the art, several simple deductions or substitutions can be made without departing from the concept of the present disclosure, and these should be considered within the scope of the present disclosure.

## Claims

1. A laser welding method, **characterized by** comprising the following steps:

   S100: setting a laser beam trajectory and a moving speed of a first welding part and a second welding part, wherein the laser beam trajectory comprises an oscillation trajectory and oscillation frequency;
   S200: arranging the first welding part and the second welding part such that the oscillation trajectory has at least two intersection points with a gap to be welded between the first welding part and the second welding part;
   S300: moving the first welding part and the second welding part at the moving speed, and activating a laser beam to weld the first welding part and the second welding part along the laser beam trajectory.

2. The laser welding method according to claim 1, wherein the oscillation trajectory is a combination of one or more shapes of polygonal, circular, and elliptical.

3. The laser welding method according to claim 1, wherein the oscillation trajectory is symmetric with respect to the gap to be welded.

4. The laser welding method according to claim 1, wherein the oscillation trajectory is quadrilateral, a spot diameter of the laser beam is D, a first side length of the quadrilateral perpendicular to an extension direction of the gap to be welded is H, a width of the gap to be welded between the first welding part and the second welding part is h, and the following conditions are satisfied: $D+h/2 \leq H \leq D+h$.

5. The laser welding method according to claim 4, wherein a second side length of the quadrilateral in the extension direction of the gap to be welded is L, and the following conditions are satisfied: $D<L$, or, $H<L$.

6. The laser welding method according to claim 1, wherein the oscillation frequency is less than or equal to 100Hz.

7. The laser welding method according to claim 1, wherein a width of the gap to be welded between the first welding part and the second welding part is h, and the width h is less than or equal to 1.0mm.

8. The laser welding method according to claim 1, wherein the oscillation trajectory is achieved by oscillation of internal galvanometers in a laser welding head.

9. A compressor, **characterized in that** at least two components of the compressor are fixedly connected using the laser welding method according to any one of claims 1 to 8.

10. The compressor according to claim 9, comprising an upper shell cover, a lower shell cover, and a shell, wherein the upper shell cover and the shell, as well as the lower shell cover and the shell, are fixedly connected using the laser welding method.

S100

setting a laser beam trajectory and a moving speed of a first welding part and a second welding part, wherein the laser beam trajectory includes an oscillation trajectory and oscillation frequency

S200

arranging the first welding part and the second welding part such that the oscillation trajectory has at least two intersection points with a gap to be welded between the first welding part and the second welding part

S300

moving the first welding part and the second welding part at the moving speed, and activating a laser beam to weld the first welding part and the second welding part along the laser beam trajectory

FIG. 1

FIG. 2

H

D

D

h

gap to be welded

FIG. 3

shell cover

A2

A1

X

shell

FIG. 4

FIG. 5

shell cover

X

A2 A1

shell

FIG. 6

shell cover

X

A2

A1

shell

FIG. 7

## INTERNATIONAL SEARCH REPORT

| International application No. |
| --- |
| **PCT/CN2025/079540** |

| A. | CLASSIFICATION OF SUBJECT MATTER |
| --- | --- |

B23K26/21(2014.01)i;  B23K26/08(2014.01)i;  B23K26/044(2014.01)i;  F04C29/00(2006.01)i

According to International Patent Classification (IPC) or to both national classification and IPC

| B. | FIELDS SEARCHED |
| --- | --- |

Minimum documentation searched (classification system followed by classification symbols)

IPC：B23K，F04C

Documentation searched other than minimum documentation to the extent that such documents are included in the fields searched

Electronic data base consulted during the international search (name of data base and, where practicable, search terms used)

CNKI, CNTXT, VEN: 激光, 焊接, 轨迹, 移动速度, 摆动, 频率, 间隙, 交叉点, 压缩机, 盖, 壳, laser, welding, track, move, speed, swing, sway, frequency, gap, intersection, cross, compressor, lid, shell

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107414293 A (HAN'S LASER TECHNOLOGY INDUSTRY GROUP CO., LTD.) 01 December 2017 (2017-12-01) <br> description, paragraphs 43-59, and figures 1-13 | 1-8 |
| Y | CN 107414293 A (HAN'S LASER TECHNOLOGY INDUSTRY GROUP CO., LTD.) 01 December 2017 (2017-12-01) <br> description, paragraphs 43-59, and figures 1-13 | 9-10 |
| Y | CN 112855539 A (GUANGDONG MEIZHI PRECISION MANUFACTURING CO., LTD.) 28 May 2021 (2021-05-28) <br> description, paragraphs 50-94, and figures 1-16 | 9-10 |
| A | CN 102728953 A (YASKAWA ELECTRIC CORP.) 17 October 2012 (2012-10-17) <br> entire document | 1-10 |
| A | CN 1559743 A (AVIC BEIJING AERONAUTICAL MANUFACTURING TECHNOLOGY RESEARCH INSTITUTE) 05 January 2005 (2005-01-05) <br> entire document | 1-10 |
| A | JP 2007021579 A (NIPPON STEEL CORP.) 01 February 2007 (2007-02-01) <br> entire document | 1-10 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 April 2025** | **24 May 2025** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/079540** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2014205166 A (NIPPON SHARYO SEIZO K.K.) 30 October 2014 (2014-10-30) entire document | 1-10 |

Form PCT/ISA/210 (second sheet) (July 2022)

**INTERNATIONAL SEARCH REPORT**
Information on patent family members

International application No.

**PCT/CN2025/079540**

| Patent document cited in search report | | | Publication date (day/month/year) | Patent family member(s) | | | Publication date (day/month/year) |
|---|---|---|---|---|---|---|---|
| CN | 107414293 | A | 01 December 2017 | None | | | |
| CN | 112855539 | A | 28 May 2021 | None | | | |
| CN | 102728953 | A | 17 October 2012 | EP | 2508293 | A1 | 10 October 2012 |
| | | | | US | 2012255937 | A1 | 11 October 2012 |
| | | | | US | 8965556 | B2 | 24 February 2015 |
| | | | | JP | 2012218030 | A | 12 November 2012 |
| | | | | JP | 5459256 | B2 | 02 April 2014 |
| CN | 1559743 | A | 05 January 2005 | None | | | |
| JP | 2007021579 | A | 01 February 2007 | JP | 4786372 | B2 | 05 October 2011 |
| JP | 2014205166 | A | 30 October 2014 | JP | 6095456 | B2 | 15 March 2017 |

Form PCT/ISA/210 (patent family annex) (July 2022)